# EUROPEAN PATENT SPECIFICATION

(11) **EP 0 383 294 B1**
(45) Date of publication and mention of the grant of the patent: **31.08.1994**
(21) Application number: 90102877.9
(22) Date of filing: 14.02.1990
(51) Int. Cl.: F16F 1/00

(54) **Spring with two states of stable equilibrium**
Feder mit zwei stabilen Gleichgewichtszuständen
Ressort à deux positions d'équilibre stable

(30) Priority: 14.02.1989 PL 277718
(43) Date of publication of application: 22.08.1990
(73) Proprietor: Polska Akademia Nauk Instytut Podstawowych Problemow Techniki, 00-049 Warszawa (PL)
(72) Inventor: Frackiewicz, Henryk, PL-04 355 Warszawa (PL)
(74) Representative: Füchsle, Klaus, Dipl.-Ing.

(56) References cited:
- FR-A- 2 091 057
- GB-A- 1 429 631
- PL-A- 129 927
- US-A- 2 882 748
- PATENT ABSTRACTS OF JAPAN vol. 3, no. 29 (M-51)March 10, 1979
- & JP-A-54 003 646 (MATSUSHITA DENKO ) January 11, 1979

## Description

The present invention relates to a spring with two states of stable equilibrium applicable for control of mutual positioning of movable co-acting parts and for accumulation of elastic strain energy, and in particular to a spring according to the preambles of claims 1 and 2.

Such a spring is known from GB-A-1 429 631 as a bi-stable operating device comprising a strip of resilient material, the free ends of which are seated in bearings, one of which is fixed and the other of which is movable in a straight line towards the fixed bearing by a spring acting longitudinally of the strip to bow the strip in one direction or the other and is movable against the action of the spring in a straight line away from the fixed bearing to be momentarily operable longitudinally of the strip to reverse the bowing direction of the strip.

The spring can be used for clamping various components, for closing kinematic chains, for permanent accummulation of elastic strain energy in bumpers, as well as for ensuring two equilibrium positions in mechanisms of various kinds.

Those skilled in art know springs having the shape of rods, plates and spirally and helically coiled wires, as well as strips of various shapes. They have very diversified characteristics depending upon the kind of the material being used and upon their initial form.

From the Polish Patent Specification No. 1 299 27 there is known, for instance, a spring with a non-linear characteristic. The essential component parts of this spring are two horizontal elements, situated perpendicularly to the direction of action of the loading force, connected to each other by means of two vertical elements, preliminarily bent aside with respect to each other in opposite directions and perpendicular to the edges of the horizontal elements, wherein said vertical elements have a variable cross section along the length of the element.

A characteristic feature of all springs so far used consists in that for a given external load there exists one and only one deformation of the spring which corresponds to its state of equilibrium. This means that the characteristic curve of the spring which describes the relationship between the external load and the deformability parameter is a single-valued function. In the case of use of the existing springs achievement of two states of equilibrium for the same external load requires application of systems which include at least one additional element besides the spring.

The springs used heretofore can accumulate elastic strain energy only when they are subjected to the action of some external load and when the external load no longer exists, elastic strain energy is converted into another kind of energy.

The object of the present invention is to provide a spring with controllable states of equilibrium of parts set in motion within a definite range of the motion.

This object is solved according to the present invention by a spring including the features of claim 1 or 2.

According to aspect of the present invention, the spring should consist of at least one pair of flexible strips, whose sections have been bent aside with respect to each other at a constant or varying angle, said strips being connected to each other, for example at the ends with shaped elements in such a way as to provide a slot /slots/ between them having a defined length and width.

The flexible strips, prior to being deformed and fastened in the shaped elements, have various shapes, but the Gaussian curvature of their medium surface must be equal to zero.

By choosing appropriately the properties of the materials of the flexible strips, by selecting the shape and properties of the material of the shaped elements and by fixing the flexible strips appropriately to the shaped elements, various structural solutions of the spring being the subject of the invention can be obtained. The considerable variety of the thus obtained spring solutions is accompanied by an even greater variety of characteristics describing the relationship between the external loads of the spring and the parameter which determines its deformation. Proper selection of geometrical and elastic parameters of the spring makes it possible to always obtain a uni-valued characteristic curve corresponding to a spring with at least two states of stable equilibrium. A structural solution of a spring characterized by the ability of permanent accumulation of elastic strain energy can thereby also be obtained.

The invention is further described on the basis of three examples of embodiments shown in the drawings, wherein
Fig. 1 and Fig. 2 show a view of a two-positional spring according to the present invention,
Fig 3 shows the curve of characteristics of the spring depicted in Fig. 1 and 2,
Fig. 4 and Fig. 5 show a second example of a two-positional spring according to the present invention,
Fig. 6 shows the curve of characteristics of the spring depicted in Fig. 4 and 5,
Fig. 7 and Fig. 8 show a third example of a two-positional spring according to the present invention, and
Fig. 9 shows the curve of characteristics of the spring according to Fig. 7 and 8.

### Example I.

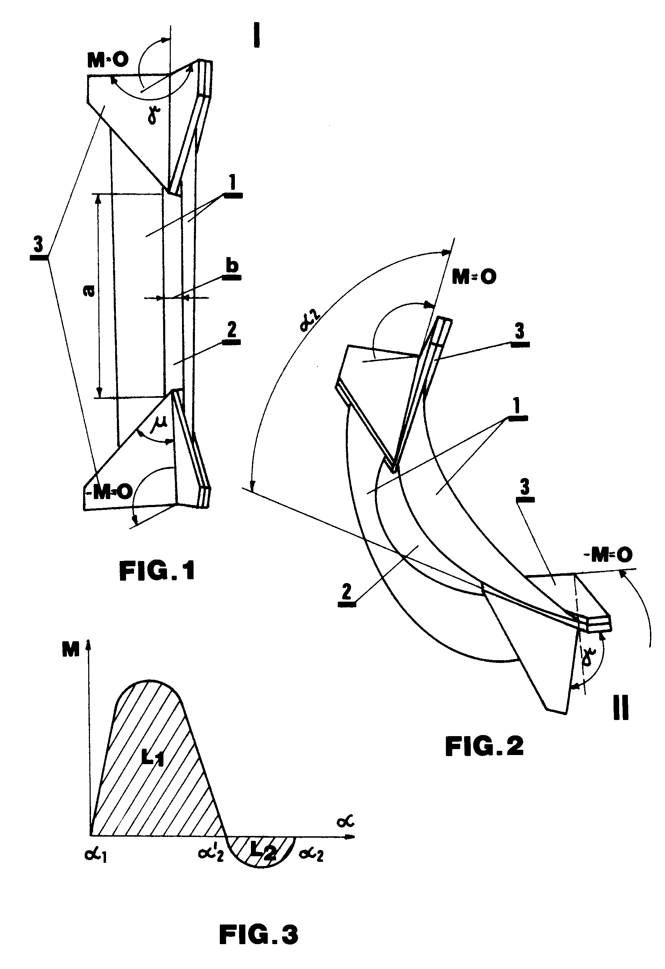

A two-state spring shown in the drawing in Fig. 1 and Fig. 2 consists of two initially flat elastic flexible strips 1 and two shaped elements 3 with two arms inclined with respect to each other at an angle γ. The ends of the flexible elastic strips 1 are fixedly connected in the arms of the shaped elements 3. The strips 1 are inclined to each other at an angle γ, the same as the inclination angle of the arms of the shaped elements 3.

Thrust edges of the shaped elements 3 form an angle γ with the axis of symmetry. Between the neighbouring sides of the strips 1, a slot 2 is formed of length a and width b dependent upon the parameters and characteristic of the spring. Strips 1, prior to being fixed in the arms of the shaped elements 3, are not deformed, see Fig. 1.

The functioning of the spring is as follows. As shown by the curve presented in Fig. 3, the spring has two positions in which there is a state of stable equilibrium, corresponding to the moment M = 0 in position I and in position II. The spring can be deflected from position I by application of the moments "+M" and "-M". The strips 1 remain non-deformed. An increase in the moments "+M" and "-M" is followed by an increase of deformation determined by the angle α, variation of which is shown by the curve of characteristics in Fig. 3.

From the curve of characteristics, it may be seen that for α = α₁, α = α'₂ and α = α₂, when the moments under consideration are equal to zero, the value of α'₂ corresponds to a state of unstable equilibrium of the spring and α₁ and α₂ correspond to a state of stable equilibrium of the spring.

Hence, the spring has two states of stable equilibrium for α = α₁ = 0 and α = α₂ with the corresponding moments M = 0 and -M = 0.

The characteristics of the spring which describes the relationship between the moment and the deformation as shown in Fig. 3 depends upon the geometrical parameters of the spring and its material's constants.

Experimental or theoretical selection of these parameters ensures establishing of such a relation between the energy of compression and tension, bending and twisting of the spring, for which one obtains the states of stable equilibrium in two positions : α = α₁ = 0 and α = α₂. The spring presented in this example is characterized by the fact that in the position II of the state of equilibrium corresponding to α₁ = 0 it accumulates in a permanent way the amount of elastic strain energy equal to the difference of the work /L₁-L₂/. Such springs are applicable, for example, in bumper structures, etc.

### Example II.

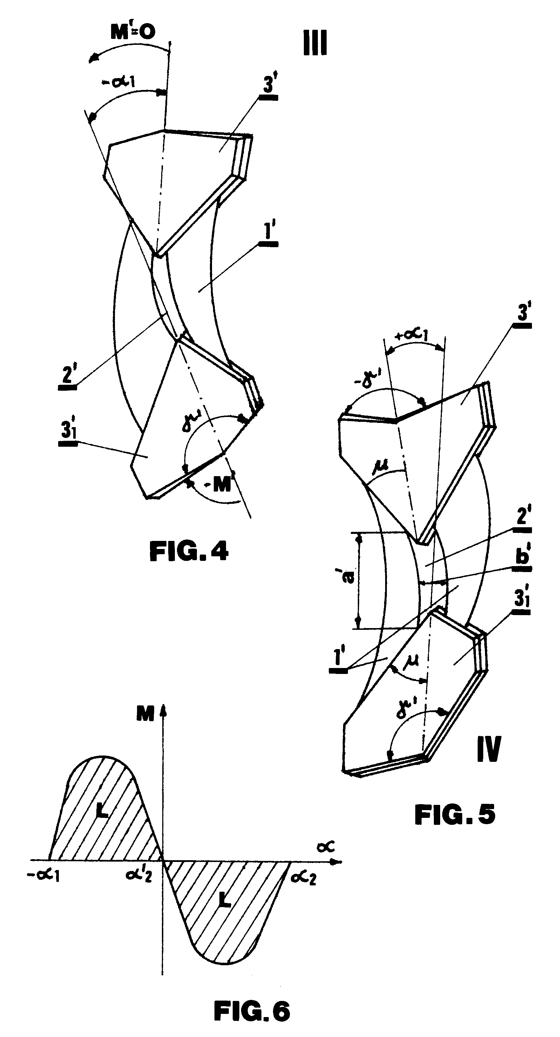

The two-positional spring presented in Fig. 4 and Fig 5 consists of two flat flexible elastic strips 1' and two shaped elements: the first 3' and the second 3₁' determined by the angle + γ' and - γ' respectively. Firstly, one end of each of the flexible elastic strips 1' is fixed in the first shaped element 3' at an angle + γ' and next, after the required deformation, the other ends are fixed in the second shaped element 3₁' at the angle - γ'. The spring will then assume the position shown in Fig. 4, which corresponds to the external load M' = 0 and -M' = 0. Between the neighbouring sides of the strips 1', a slot 2' of a length a' and a variable width b' is formed.

The functioning of this spring is described in the following. As can be seen from the curve of characteristics shown Fig. 6, the spring is characterized by two states of stable equilibrium in position III shown in Fig. 4 and position IV shown in Fig. 5.

The spring can be deflected from position III in Fig. 4 by the application of the moments "M'" and"-M'". The strips 1' are then deformed and an increase in the moments "M'" and "-M'" is followed by an increase in the amount of deflection defined by the angle α₁, the changes of which are shown by the characteristics shown in Fig. 6. The curve shown in Fig. 6 implies that for α = - α₁, α = α₂' and α = α₂, the moments are equal to zero, point α₂' corresponding to an unstable state of equilibrium and α₁ and α₂ corresponding to a stable state of equilibrium. Hence, the spring under consideration has two states of stable equilibrium: α = - α₁ and α = α₂ = - α₁, with the corresponding moments M' = 0 and - M' = 0. The characteristic curve of the spring describing the relationship between the moment and the deformation as shown in Fig. 6 depends upon the geometrical parameters of the spring and its material's constants.

An experimental or theoretical selection of those parameters ensures the establishment of such a relation between the energy of compression and tension, bending and twisting, for which a state of stable equilibrium is obtained at two positions, namely α = - α₁ and α = α₂' = - α₁.

The spring presented in this example is characterized by the fact that in both states of stable equilibrium it accumulates permanently the same minimum elastic strain energy.

### Example III.

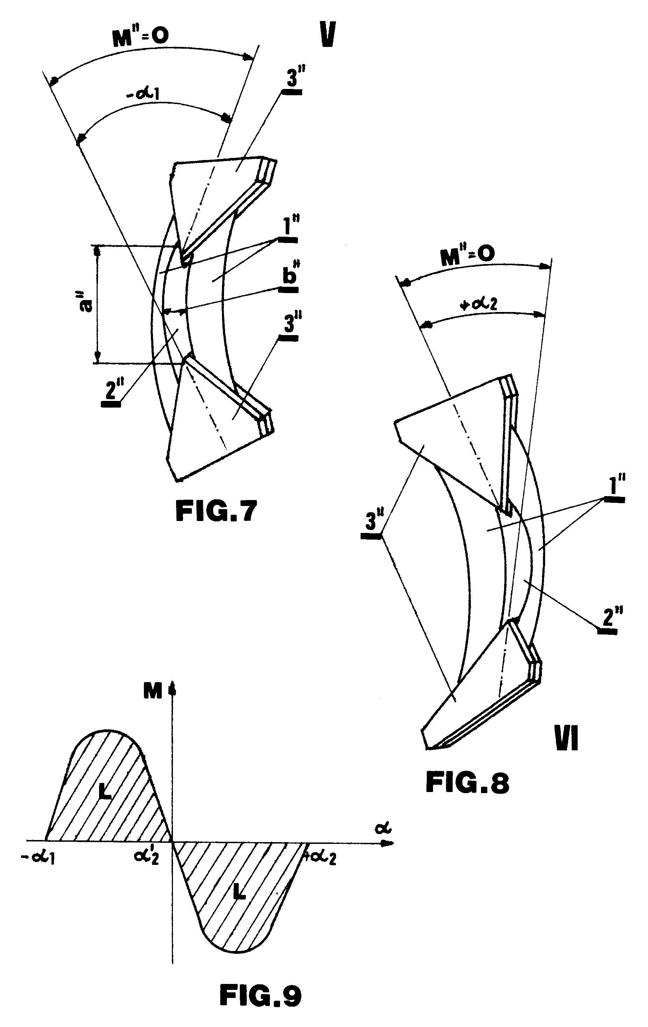

Fig. 7 and Fig. 8 show a further example of spring with two states of stable equilibrium. The spring presented in these figures consists of two flat flexible elastic strips 1'' and two shaped elements 3'' in which the angles γ'' = 180 degrees ie. the shaped elements are flat. The strips 1'' are first fixedly connected with one end of each of the strips 1'' to the first shaped element 3'' and then the appropriately deformed strips 1'' are fixed to the second shaped element 3''.

The spring will assume a position shown in Fig. 8 which corresponds to the external loading moments M'' = 0 and -M'' = 0. Between the neighbouring sides of said strips 1'', a slot 2'' of a length a'' and a variable width b'' is formed.

The shape of said slot 2'' is established depending upon the parameters and characteristics of the spring.

The functioning the spring is as follows. The curve presented in Fig. 9 shows that the spring under consideration is characterized by two states of stable equilibrium in position V shown in Fig. 7 and in position VI shown in Fig. 8. The spring is deflected from position V in Fig. 7 by the application of the moments M'' and -M''. The strips 1'' become deformed and an increase in the moments M'' and -M'' is accompanied by an increase the deflection defined by the angle α. The occurring changes are shown by the characteristic curve in Fig. 9. From the presented diagram, it can be seen that for α = - α₁, α = α₂' and α = α₂, the moments are equal to zero, with point α₂' corresponding to a state of unstable equilibrium and α₁ and α₂ corresponding to a state of stable equilibrium. Hence, the spring under consideration here has two states of stable equilibrium for α = - α₁ and α = α₂ = - α₁, with the corresponding moments M'' = 0 and -M'' = 0.

The characteristic curve of the spring which describes the relationship between the moment and deformation as shown in Fig. 9 depends upon geometrical parameters of the spring and its material's constants.

The spring presented in this example also has two states of stable equilibrium, similarly as the springs presented in the two previous examples. The proper choice of parameters, either experimentally or theoratically, can ensure the establishment of the required relation between the energies for which the phenomenon of stable equilibrium takes place.

Reference signs in the claims are intended for better understanding and shall not limit the scope.

## Claims

1. A spring with two states of stable equilibrium including at least one flexible strip (1,1') and two shaped elements (3,3',3₁'), each of the shaped elements (3,3',3₁') being formed by two arms inclined with respect to each other,
characterised by
at least one pair of flexible strips (1,1') fixedly connected to one another via the arms (1,1') such that a slot (2,2') of a length (a,a') and a variable width (b,b') is formed between the neighbouring sides of the strips (1,1'), the two arms of each of the two shaped elements (3,3',3₁') being inclined with respect to one another at an angle in a plane substantially perpendicular to the extension of the flexible strips (1,1') and the flexible strips (1,1') being situated in relation to one another such that they are inclined at an angle determined by the inclination angle of the arms of the shaped elements (3,3',3₁').

2. A spring with two states of stable equilibrium including at least one flexible strip (1'') and two shaped elements (3''),
characterised by
at least two flexible strips (1''), by the at least two shaped elements (3'') being flat elements having at least two edges arranged at an angle with respect to one another in a plane of the extension of the flexible strips (1'') in the unbent state, and by the at least two flexible strips (1'') being fixedly connected to one another via the edges of the flat shaped elements (3'') after the flexible strips (1'') have been bent such that a slot (2'') of a length (a'') and a variable width (b'') is formed between the neighbouring sides of the flexible strips (1''), the width (b'') decreasing from the middle portion of the flexible strips (1'') to the shaped elements (3'').

3. Spring according to claim 1 or 2, characterised in that the shaped elements (3,3',3₁';3'') are connected to the ends of the flexible strips (1,1';1'').

4. Spring according to claim 1 or 2, characterised in that in a non-stressed state, the strips (1,1';1'') have a shape corresponding to a Gaussian curvature with its medium surface equal to zero.

5. Spring according to claim 1 or 2, characterised in that the flexible strips have a variable cross section.

6. Spring according to claim 1 or 2, characterised in that the flexible strips (1,1';1'') are elastically connected.

7. Spring according to claim 1 or 2, characterised in that the shaped elements (3,3',3₁';3'') are elastic.

## Patentansprüche

1. Feder mit zwei Zuständen eines stabilen Gleichgewichts, die mindestens einen flexiblen Streifen (1, 1') und zwei geformte Elemente (3, 3', 3₁') enthält, wobei jedes geformte Element (3, 3', 3₁') durch zwei gegeneinander geneigte Arme gebildet ist,
**gekennzeichnet** durch
mindestens zwei flexible Streifen (1, 1'), die mittels der Arme (1, 1') fest miteinander verbunden sind, derart, daß ein Schlitz (2, 2') mit einer Länge (a, a') und variabler Breite (b, b') zwischen den benachbarten Seiten der Streifen (1, 1') ausgebildet ist, wobei die beiden Arme jedes der beiden geformten Elemente (3, 3', 3₁') gegeneinander um einen Winkel in einer Ebene geneigt sind, die im wesentlichen senkrecht zur Erstreckung der flexiblen Streifen (1, 1') verläuft, und wobei die flexiblen Streifen (1, 1') bezogen aufeinander derart angeordnet sind, daß sie um einen Winkel geneigt sind, der durch den Neigungswinkel der Arme der geformten Elemente (3, 3', 3₁') festgelegt ist.

2. Feder mit zwei Zuständen eines stabilen Gleichgewichts, die mindestens einen flexiblen Streifen (1'') und zwei geformte Elemente (3'') enthält,
**gekennzeichnet** durch
mindestens zwei flexible Streifen (1''), dadurch, daß die mindestens zwei geformten Elemente (3'') flache Elemente mit mindestens zwei Kanten sind, die bezogen aufeinander unter einem Winkel in einer Ebene der Erstreckung der flexiblen Streifen (1'') im ungebogenen Zustand angeordnet sind, und dadurch, daß die mindestens zwei flexiblen Streifen (1'') mittels der Kanten der flach geformten Elemente (3'') miteinander fest verbunden worden sind, nachdem die flexiblen Streifen (1'') derart gebogen wurden, daß ein Schlitz (2'') einer Länge (a'') und einer variablen Breite (b'') zwischen den benachbarten Seiten der flexiblen Streifen (1'') ausgebildet ist, wobei die Breite (b'') von dem Mittelabschnitt der flexiblen Streifen (1'') zu den geformten Elementen (3'') hin abnimmt.

3. Feder nach Anspruch 1 oder 2,
dadurch **gekennzeichnet,** daß
die geformten Elemente (3, 3', 3₁'; 3'') mit den Enden der flexiblen Streifen (1, 1'; 1'') verbunden sind.

4. Feder nach Anspruch 1 oder 2,
dadurch **gekennzeichnet,** daß
die Streifen (1, 1'; 1'') in einem entspannten Zustand eine Form haben, die einer Gaußschen Kurve entspricht, deren mittlere Fläche gleich Null ist.

5. Feder nach Anspruch 1 oder 2,
dadurch **gekennzeichnet,** daß
die flexiblen Streifen einen variablen Querschnitt besitzen.

6. Feder nach Anspruch 1 oder 2,
dadurch **gekennzeichnet,** daß
die flexiblen Streifen (1, 1'; 1'') elastisch verbunden sind.

7. Feder nach Anspruch 1 oder 2,
dadurch **gekennzeichnet,** daß
die geformten Elemente (3, 3', 3₁'; 3'') elastisch sind.

## Revendications

1. Ressort présentant deux états d'équilibre stable, comportant au moins une bande flexible (1, 1') et deux éléments façonnés (3, 3', 3₁'), chacun des éléments façonnés (3, 3', 3₁') étant constitué de deux bras inclinés l'un par rapport à l'autre,
caractérisé par :
au moins une paire de bandes flexibles (1, 1') reliées de manière fixe l'une à l'autre via les bras (1, 1') de sorte qu'une fente (2, 2') d'une certaine longueur (a, a') et d'une largeur variable (b, b') est formée entre les côtés proches des bandes (1, 1'), les deux bras de chacun des deux éléments façonnés (3, 3', 3₁') étant inclinés l'un par rapport à l'autre suivant un certain angle dans un plan sensiblement perpendiculaire à l'extension des bandes flexibles (1, 1') et les bandes flexibles (1, 1') étant situées l'une par rapport à l'autre de façon à être inclinées suivant un angle déterminé par l'angle d'inclinaison des bras des éléments façonnés (3, 3', 3₁').

2. Ressort présentant deux états d'équilibre stable, comportant au moins une bande flexible (1'') et deux éléments façonnés (3''),
caractérisé par :
au moins deux bandes flexibles (1''), les deux au moins éléments façonnés (3'') étant des éléments plats ayant au moins deux bords disposés suivant un certain angle l'un par rapport à l'autre dans le plan de l'extension des bandes flexibles (1'') à l'état non cambré, et en ce que les deux au moins bandes flexibles (1'') sont connectées de manière fixe l'une à l'autre via les bords des éléments façonnés plats (3'') après que les bandes flexibles (1'') aient été cambrées de sorte qu'une fente (2'') d'une certaine longueur (a'') et d'une largeur variable (b'') est formée entre les côtés voisins des bandes flexibles (1''), la largeur (b'') diminuant à partir de la partie médiane des bandes flexibles (1'') jusqu'aux éléments façonnés (3'').

3. Ressort selon la revendication 1 ou 2, caractérisé en ce que les éléments façonnés (3, 3', 3₁'; 3'') sont reliés aux extrémités des bandes flexibles (1, 1'; 1'').

4. Ressort selon la revendication 1 ou 2, caractérisé en ce qu'à l'état non contraint, les bandes (1, 1'; 1'') ont une forme correspondant à une courbe Gaussienne avec sa surface médiane égale à zéro.

5. Ressort selon la revendication 1 ou 2, caractérisé en ce que les bandes flexibles ont une section transversale variable.

6. Ressort selon la revendication 1 ou 2, caractérisé en ce que les bandes flexibles (1, 1'; 1'') sont reliées élastiquement.

7. Ressort selon la revendication 1 ou 2, caractérisé en ce que les éléments façonnés (3, 3', 3₁'; 3'') sont élastiques.
